# EUROPÄISCHE PATENTANMELDUNG

(11) **EP 0 942 222 A1**
(43) Veröffentlichungstag der Anmeldung: **15.09.1999**
(21) Anmeldenummer: 99102716.0
(22) Anmeldetag: 18.02.1999
(51) Int. Cl.: F16N 21/00

(54) **Schmiermittel-Übertragungseinrichtung**

(30) Priorität: 13.03.1998 US 42163
(71) Anmelder: Heidelberger Druckmaschinen Aktiengesellschaft, 69115 Heidelberg (DE)
(72) Erfinder: Guaraldi, Glenn Alan, Kingston, NH 03848 (US); Wingate, Mark Anthony, Rochester, NH 03867 (US)
(74) Vertreter: Hörschler, Wolfram Johannes, Dipl.-Ing.

(57) **Zusammenfassung**

Es ist eine Schmiermittel-Übertragungseinrichtung vorgesehen, bei der Schmiermittel von einer Schmiermittelübertragungsleitung (2) in eine in einem Lagerstützgehäuse (4) geformte Schmiermittelzuführbohrung (12) übertragen wird. Eine Schmiermittelübertragungsbuchse (8) befindet sich an dem sich bewegenden Abschnitt zwischen der Schmiermittelzuführbohrung (12) des Lagerstützgehäuses (4) und einer Schmiermitteleinlaßöffnung im einem Kurvenrollen-Hebelarm (5). Die Schmiermittelübertragungsbuchse (8) ist derart konstruiert, daß sie eine abgedichtete Verbindung zwischen der Schmiermittelbohrung in dem Lagerstützgehäuse (4) und der Schmiermitteleinlaßöffnung in dem Kurvenrollen-Hebelarm (5) bildet, und zwar in allen Positionen des der Kurvenrolle (1) und des Kurvenrollen-Hebelarms (5). Ein sich durch die Schmiermittelübertragungsbuchse erstreckende Schmiermittelbohrung ist so dimensioniert, daß diese einen Durchlaß zwischen der Schmiermittelzuführleitung im Lagerstützgehäuse (4) und der Schmiermitteleinlaßöffnung im Kurvenrollen-Hebelarm (5), und zwar in jeder Winkelposition des Kurvenrollen-Hebelarms (5), ermöglicht; jedoch die Überlappung der Durchlässe ist nicht übermäßig, so daß die Schmiermittelbohrung und die Schmiermitteleinlaßöffnung der Atmosphäre nicht ausgesetzt sind und keine Leckage verursachen. Die Schmiermitteleinlaßöffnung im Kurvenrollen-Hebelarm (5) führt zu Durchlässen im Kurvenrollen-Hebelarm und in der Kurvenrolle (1), durch die das Schmiermittel von der Einlaßöffnung zur Kurvenrolle ohne Leckage übertragen wird.

## Beschreibung

Die vorliegende Erfindung betrifft eine Einrichtung zum Zuführen von Schmiermittel quer durch einen sich zwischen Teilen bewegenden Abschnitt. Im besonderen betrifft die vorliegende Erfindung eine Schmiermittelübertragungsbuchse für das Übertragen von Schmiermittel von einer Schmiermittelleitung in einen Zylinderkörper eines mit hohen Geschwindigkeiten betriebenen Kombinationsfalzapparates für eine Druckmaschine und in eine Kurvenrolle, die relativ zum Zylinderkörper bewegbar ist.

In den mit Druckmaschinen verwendeten, mit hohen Geschwindigkeiten betriebenen Kombinationsfalzapparaten sind bekanntlich ein Zylinder, eine Welle und eine relativ zur Welle schwenkbar gelagerte Kurvenrolle vorgesehen. Wie aus dem Stand der Technik bekannt ist, sind die Kurvenrollen hohen Belastungen und hohen Drehgeschwindigkeiten ausgesetzt; folglich muß die Kurvenrolle geschmiert werden, um gut zu funktionieren. Bei den bekannten Falzapparaten wird die Versorgung der Kurvenrolle mit Schmiermittel auf zweierlei Weise sichergestellt, nämlich durch abgedichtete Kurvenrollen und durch nachschmierbare Kurvenrollen.

Bei den verschlossenen Kurvenrollen ist das Schmiermittel- gewöhnlich Schmierfett - in der Kurvenrolle verschlossen und wird während des Betriebs nicht nachgefüllt. Es ist ein Nachteil bei abgedichteten Kurvenrollen, daß, wenn das Schmiermittel durch Erwärming flüssig wird (beispielsweise bei einer Temperatur höher als 70°C), es durch die Abdichtung austreten kann, so daß aufgrund einer reduzierten Schmierfettversorgung die Kurvenrolle heißlaufen kann.

Wegen der oben beschriebenen Nachteile der abgedichteten Kurvenrollen wurden nachschmierbare Kurvenrollen konstruiert. Eine herkömmliche Anordnung einer nachschmierbaren Kurvenrolle umfaßt Schmiermittelzuführleitungen, die mit einer Schmiermitteleinlaßöffnung in dem Kurvenrollen-Hebelarm verbunden sind, und zwar über ein flexibles Kunststoffrohr, das den dynamischen Abschnitt zwischen den sich bewegenden Teilen (d. h. zwischen dem Zuführgehäuse und dem Kurvenrollen-Hebelarm überbrückt. Die Schmiereinlaßöffnungöffnung ist mit Schmiermittelkanälen oder -nuten im Inneren des Kurvenrollen-Hebelarms verbunden, durch welche das Schmiermittel von der Schmiermitteleinlaßöffnung auf die Kurvenrolle übertragen wird, so daß die Kurvenrolle ständig mit Schmiermittel versorgt ist.

Bei den Kurvenrollen-Anordnungen des Standes der Technik ist eine Relativbewegung zwischen dem Zylinderkörper und dem Kurvenrollen-Hebelarm gegeben. Das Vorhandensein eines sich bewegenden Abschnitts zwischen diesen Teilen bereitet die Schwierigkeit, das Schmiermittel auf einem Weg zuzuführen, der diesen sich bewegenden Abschnitt durchquert. Es wurde festgestellt, daß bei den bekannten nachschmierbaren Kurvenrollen der Nachteil besteht, daß das die SchmiermittelZuführleitung mit der Schmiermittel-Zuführöffnung verbindende flexible Kunststoffrohr, das zur Überbrückung des sich bewegenden Abschnitts verwendet wird, eine begrenzte Lebensdauer hat und bei der Umdrehung durch stationäre Teile beschädigt werden kann. Das flexible Kunststoffrohr kann Risse bekommen, undicht werden oder von seiner Verbindung getrennt werden.

Die vorliegende Erfindung sieht eine Schmiermittel-Übertragungseinrichtung vor, mit der die Nachteile der herkömmlichen Schmiermittelübertragungsanordnungen mit flexiblen Kunststoffrohren beseitigt werden. Bei der vorliegenden Erfindung führt eine Schmiermittelübertragungsleitung in eine Schmiermittelzuführleitung oder -bohrung, die in den auf dem Zylinder angebrachten Lagerstützgehäusen geformt sind. Eine Schmiermittelübertragungsbuchse befindet sich an dem sich bewegenden Abschnitt zwischen der Schmiermittelzuführleitung in dem Sützlagergehäuse und einer Schmiermitteleinlaßöffnung in dem Kurvenrollen-Hebelarm. Die Schmiermittenübertragungsbuchse ist so konstruiert, daß sie eine bewegbare, abgedichtete Verbindung zwischen der Schmiermittelleitung in dem Lagerstützgehäuse und der Schmiermitteleinlaßöffnung in dem Kurvenrollen-Hebelarm in allen Positionen der Kurvenrolle und des Kurvenrollen-Hebelarms bildet. Die Schmiermittelübertragungsbuchse kann aus Material, wie z. B. Delrin® hergestellt sein, das einen niedrigen Reibungskoeffizienten, jedoch eine hohe Verschleißfestigkeit aufweist. Die Schmiermittelübertragungsbuchse kann mittels einer geeigneten Spannschraube, einer Feder oder einem anderen Befestigungsmechanismus an das Lagerstützgehäuse oder an den Arm der Kurvenrolle abdichtend angebracht werden. Eine sich durch die Schmiermittelübertragungsbuchse erstreckende Schmiermittelbohrung ist so dimensioniert, daß diese einen Durchlaß zwischen der Schmiermittelzuführleitung im Lagerstützgehäuse und der Schmiermitteleinlaßöffnung im Kurvenrollen-Hebelarm, und zwar in jeder Winkelposition des Hebelarms, ermöglicht. Die Schmiermitteleinlaßöffnung im Kurvenrollen-Hebelarm führt zu Durchlässen im Kurvenrollen-Hebelarm, in einem Exzenterbolzen und in der Kurvenrolle, durch die das Schmiermittel von der Einlaßöffnung zur Kurvenrolle ohne Leckage übertragen wird. Der Kurvenrollen-Hebelarm kann einen Teilausschnitt aufweisen, der es ermöglicht, den Exzenterbolzen relativ zum Kurvenrollen-Hebelarm winkelförmig zu verstellen, ohne daß der Schmiermitteldurchlaß zu den Kurvenrollen-Lagerläufen unterbrochen wird.

Die Merkmale der vorliegenden Erfindung werden in der folgenden Beschreibung im Zusammenhang mit den beigefügten, nachstehend aufgeführten Zeichnungen näher erläutert.

Es zeigen:
- Fig. 1: eine Seitenansicht eines Zylinders, einer Kurvenrolle und einer SchmiermittelÜbertragungseinrichtung gemäß einer Ausführungsform der vorliegenden Erfindung;
- Fig. 2: ein Querschnitt im Detail von der Schmiermittelübertragungsbuchse der vorliegenden Erfindung;
- Fig. 3: eine schematische Endansicht der Schmiermittelübertragungsbuchse der vorliegenden Erfindung in zwei unterschiedlichen Winkelpositionen;
- Fig. 4: einen seitlichen Querschnitt von einem Zylinder, einer Kurvenrolle und der Schmiermittel-Übertragungseinrichtung der Fig. 1;
- Fig. 5: ein Querschnitt des Kurvenrollen-Hebelarmes entlang der Linie V-V in Fig. 4;
- Fig. 6: eine Endansicht der Kurvenrolle und des Kurvenrollen-Hebelarmes mit oberen und unteren Verweilpositionen;
- Fig. 7: ein Aufriß eines Kurvenrollenschmiersystems des Standes der Technik.

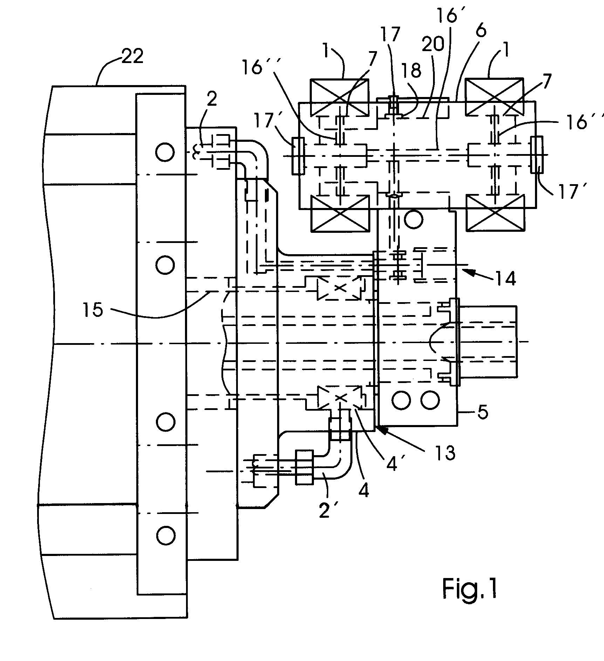

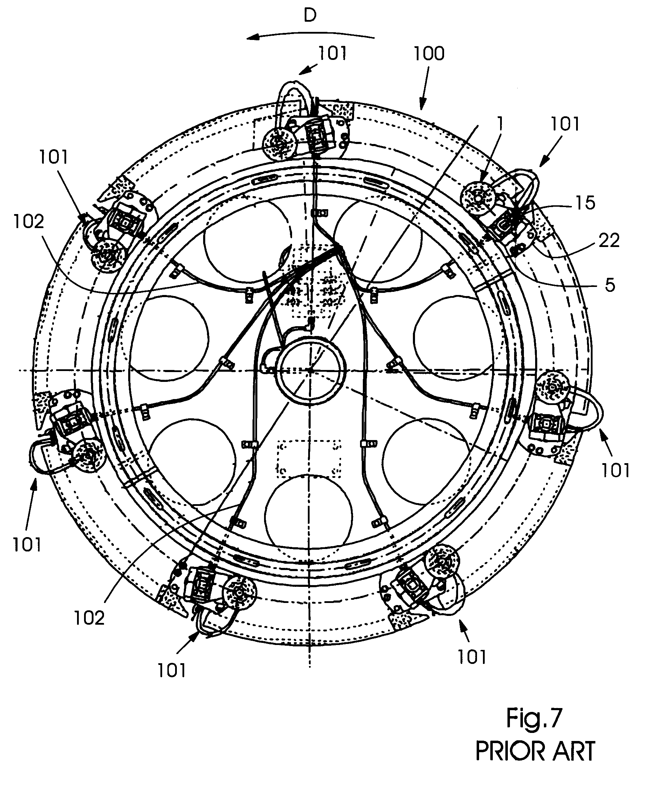

Wie in Fig. 1 gezeigt, ist auf einem Zylinder für einen mit hohen Produktionsgeschwindigkeiten betriebenen Kombinationsfalzapparat eine Greiferwelle oder eine Falzmesserwelle 15 gelagert. Wie in Fig. 7 gezeigt, können mehrere solcher Wellen auf einem Zylinder gelagert sein. Um eine Greiferwelle oder Falzmesserwelle 15 ist ein Lagerstützgehäuse 4 angebracht, das eine Schmiermittelzuführbohrung 12 aufweist, die an einem Ende mit einer Schmiermittelzuführleitung 2 verbunden ist. Das Lagerstützgehäuse 4 weist auch an einem Ende eine glatte und/oder polierte Oberfläche 13 auf.

Ein Kurvenrollen-Hebelarm 5 ist so gelagert, daß er relativ zum Lagerstützgehäuse 4 eine Drehbewegung ausüben kann. An einem Ende des Kurvenrollen-Hebelarms 5 ist ein Exzenterbolzen 20 angebracht, auf dem einer oder mehrere Kurvenrollen 1 montiert sind. Innere Lagerläufe 7 ermöglichen es den Kurvenrollen 1, sich relativ zum Exzenterbolzen 20 zu drehen. Wie im folgenden ausführlich beschrieben wird, ist der Exzenterbolzen 20 auf dem Kurvenrollen-Hebelarm 5 verstellbar angebracht.

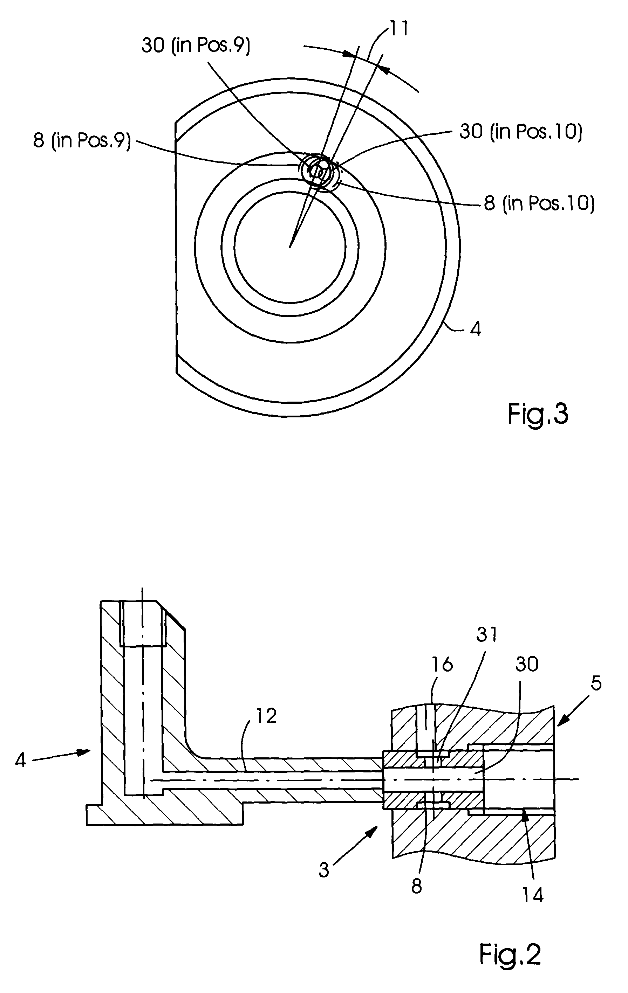

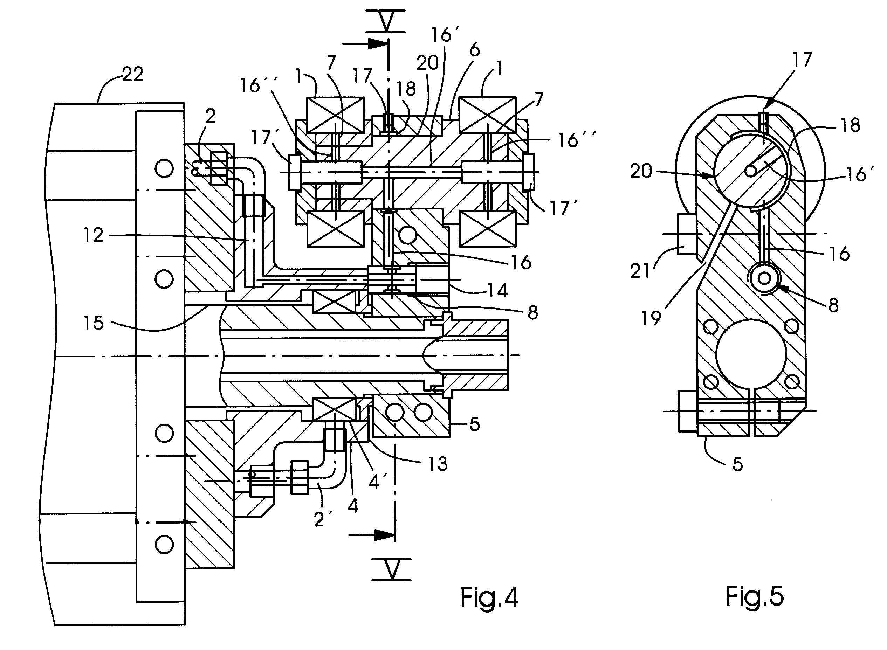

Fig. 2 und 4 sind im Querschnitt dargestellte detaillierte Ansichten der Schmiermittel-Übertragungseinrichtung der vorliegenden Erfindung. Schmiermittel, z. B. Schmierfett, wird von der Schmiermittelzuführleitung 2 in die Schmiermittelzuführbohrung 12 eingeführt. Durch eine weitere Schmiermittelzuführleitung 2' kann Schmiermittel in ein vom Lagerstützgehäuse 4 umgebenes Lager 4' eingeführt werden. An dem sich bewegenden/dynamischen Abschnitt 3 zwischen dem Lagerstützgehäuse 4 und einer Schmiermitteleinlaßöffnung im Kurvenrollen-Hebelarm 5 ist eine Schmiermittelübertragungsbuchse 8 angebracht. In der in den Fig. 2 und 4 gezeigten Ausführungsform weist die Schmiermittelübertragungsbuchse 8 ein Ende auf, das an der glatten Oberfläche 13 des Lagerstützgehäuses 4 angebracht ist und mit dieser Oberfläche in Schließ- und Gleitverbindung steht. Um eine gute Schließ- und Gleitverbindung zwischen dem Ende der Schmiermittelübertragungsbuchse 8 und der glatten Oberfläche 13 des Lagerstützgehäuses 4 zu gewährleisten, besteht die Schmiermittelübertragungsbuchse 8 vorzugsweise aus einem Material, das einen geringen Reibungsfaktor und einem hohen Verschleißwiderstand aufweist, wie z. B. Delrin®. Um dem Verschleiß Rechnung zu tragen, kann auch eine Stellschraube 14 für die Aufrechterhaltung des Kontakts zwischen der Schmiermittelübertragungsbuchse 8 und der glatten Oberfläche 13 des Lagerstützgehäuses 4 verwendet werden, so daß eine optimale Schließ- und Gleitverbindung zwischen diesen gewährleistet ist. Die Schmiermittelübertragungsbuchse 8 ist durch den Kontakt mit der glatten Oberfläche 13 dem Verschleiß unterworfen. Durch Verstellen der Stellschraube 14 kann ein verschleißbedingter Spielraum im Kontakt zwischen der Schmiermittelübertragungsbuchse 8 und der glatten Oberfläche 13 beseitigt werden. Somit wird die Schmiermittelübertragungsbuchse 8 eine gewisse Zeitdauer in einem Zustand von Null Spielraum zur glatten Oberfläche 13, d. h. ohne Verschleiß und Leckage funktionieren. Obwohl in den Fig. 2 und 4 nicht gezeigt, kann eine Druckfeder zwischen der Stellschraube 14 und der Schmiermittelübertragungsbuchse 8 plaziert werden, um eine Vorspannung zwischen letzterer und der glatten Oberfläche 13 herzustellen. Die Schmiermittelübertragungsbuchse 8 weist einen Schmiermitteldurchlaß in Form einer axialen Bohrung 30 auf, die auf die Schmiermittelzuführbohrung 12 ausgerichtet ist, und in Form einer Querbohrung 31, die auf die Übertragungsbohrung 16 des Kurvenrollen-Hebelarms 5 ausgerichtet ist, gebildet wird. Die Schmiermittelübertragungsbuchse 8 weist an der Querbohrung 31 auch eine um ihre Außenfläche geformte Nut auf, um die Schmiermittelübertragung zu gewährleisten. Somit wird durch die Schmiermittelübertragungsbuchse 8 das Schmiermittel von der Schmiermittelzuführbohrung 12 über die axiale Bohrung 30 und über die Quernut und Querbohrung 31 in die Bohrung 16 des Kurvenrollen-Hebelarmes 5 übertragen.

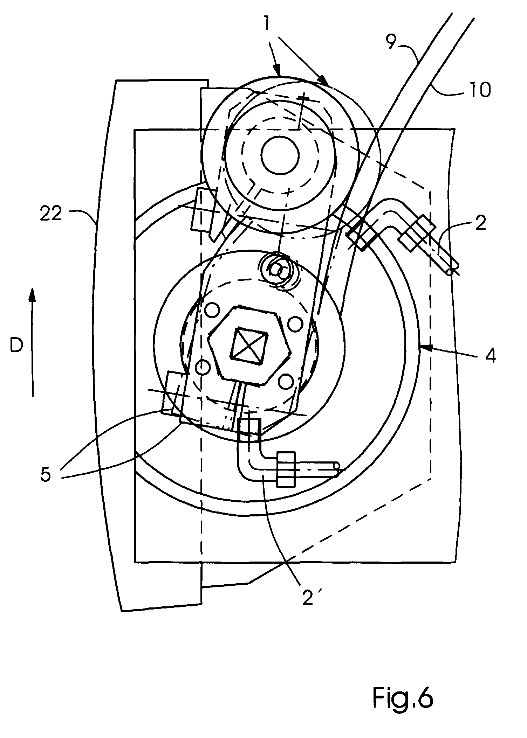

Wie besonders in Fig. 6 ersichtlich ist, dreht sich der Kurvenrollen-Hebelarm 5, so daß die Kurvenrolle 1 imstande ist, sich relativ zu einem Zuführgehäuse 22 durch einen Beeich von Winkelpositionen, und zwar von einer hohen Verweilposition 9 zu einer niedrigen Verweilposition 10 zu bewegen. Fig. 3 zeigt die Art und Weise, in der die Schmiermittelübertragungsbuchse 8 die Übertragung des Schmiermittels von der Schmiermittelzuführbohrung 12 in die Übertragungsbohrung 16 des Kurvenrollen-Hebelarms 5 durch eine vollständige Bewegung des in Fig. 6 gezeigten Kurvenrollen-Hebelarms 5 ermöglicht. Der Kurvelrollen-Hebelarm 5 schwingt um einen kleinen Winkel von 11° (normalerweise weniger als 10°) hin und her, wobei die Schmiermittelübertragungsbuchse 8 veranlaßt wird, sich relativ zur Schmiermittelzuführbohrung 12 durch einen Kreisbogen zu bewegen. Damit das Schmiermittel zwischen der ortsfesten Schmiermittelzuführbohrung 12 und der Schmiermittelübertragungsbuchse 8 in allen Positionen des Kurvenrollen-Hebelarms 5 zwischen der hohen Verweilposition 9 und der niedrigen Verweilposition 10 passieren kann, ist die axiale Bohrung 30 derart dimensioniert und positioniert, daß diese immer mindestens teilweise in Verbindung mit der Schmiermittelzuführbohrung 12 steht. Diese Konfiguration gewährleistet, daß den Kurvenrollen-Lagerläufen 7 in jeder Position des Kurvenrollen-Hebelarmes 5 Schmiermittel zugeführt wird. Die Überlappung der axialen Bohrung 30 und der Schmiermittelzuführbohrung 12 ist nicht übermäßig, so daß diese beiden Bohrungen der Atmosphäre nicht ausgesetzt sind und somit keine Leckage verursachen.

Die Fig. 4 und 5 zeigen Details der Durchlässe zur Übertragung von Schmiermittel in die inneren Lagerläufe 7 der Kurvenrollen 1. Wie oben beschrieben, fließt Schmiermittel durch die axiale Bohrung 30 und die Querbohrung 31 in der Schmiermittelübertragungsbuchse 8 zur Übertragungsbohrung 16 des Kurvenrollen-Hebelarms 5. Die Übertragungsbohrung 16 erstreckt sich axial, d. h. entlang der Länge des Kurvenrollen-Hebelarms 5 und ist dann mit einem Teilausschnitt 18 verbunden, der den Umfang eines in dem Kurvenrollen-Hebelarm 5 gelagerten Exzenterbolzens 20 teilweise umgibt. Ein Pfropfen 17 in Form eines Bolzens oder einer Schraube dient zum Abschließen des einen Endes der Übertragungsbohrung 16 am Ende des Kurvenrollen-Hebelarms 5.

Der Teilausschnitt 18 bildet einen Schmiermittelübertragungspfad zwischen der Übertragungsbohrung 16 des Kurvenrollen-Hebelarms und der Übertragungsbohrung 16' des Exzenterbolzens in einem Bereich von Winkelpositionen des Exzenterbolzens 20 relativ zum Kurvenrollen-Hebelarm 5. Wie in Fig. 4 ersichtlich ist, ist die Bohrung 16' des Exzenterbolzens 20 in zwei Durchlässe aufgeteilt, die sich axial durch den Exzenterbolzen 20 hindurch erstrecken, so daß den inneren Lagerläufen 7 beider Kurvenrollen 1 Schmiermittel zugeführt werden kann. Mittels Pfropfen 17' in Form von Bolzen oder Schrauben können die Übertragungsbohrungen oder Durchlässe 16' an jedem Ende des Exzenterbolzens 20 abgeschlossen werden. Durch radiale Bohrungen 16'' im Exzenterbolzen 20 wird den inneren Lagerläufen 7 Schmiermittel aus den Übertragungsbohrungen 16' des Exzenterbolzens zugeführt.

Der Kurvenrollen-Hebelarm 5 weist einen schräg verlaufenden 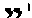 Sägeschnitt"-Schlitz 19 auf, der sich von der Außenfläche des Kurvenrollen-Hebelarms 5 zur Bohrung 16 des Exzenterbolzens 20 erstreckt. Der Schlitz 19 erlaubt eine winkelförmige Verstellung des Exzenterbolzens 20 relativ zum Kurvenrollen-Hebelarm 5' wobei eine Verstellung der Kurvenrollen 1 relativ zum Kurvenrollen-Hebelarm 5 bewirkt wird. Es ist eine Spannschraube 21 vorgesehen, die zur Verstellung des Exzenterbolzens 20 im Kurvenrollen-Hebelarm 5 gelockert wird und die wieder angezogen wird, um den Exzenterbolzen 20 festzusetzen. Die umfängliche Erstreckung des Teilausschnitts 18 gewährleistet, daß der Exzenterbolzen 20 in einem Bereich von ca. 180° relativ zum Kurvenrollen-Hebelarm 5 verstellt werden kann, ohne die Verbindung zwischen der Übertragungsbohrung 16 des Kurvenrollen-Hebelarms und der Übertragungsbohrung 16' des Exzenterbolzens zu unterbrechen. Somit kann das Schmiermittel in allen Positionen des Exzenterbolzens 20 relativ zum Kurvenrollen-Hebelarm 5 frei hießen.

### LISTE DER BEZUGSZEICHEN

- 1: Kurvenrolle (Fig. 1, Fig. 7)
- 2: Schmiermittelzuführleitung (Fig. 1)
- 4: Lagerstützgehäuse (Fig. 1)
- 5: Kurvenrollen-Hebelarm (Fig. 1, Fig. 7)
- 7: innere Lagerläufe (Fig. 1)
- 8: Schmiermittelübertragungsbuchse (Fig. 2)
- 9: hohe Verweilposition (Fig. 6)
- 10: niedrige Verweilposition (Fig. 6)
- 12: Schmiermittelzuführbohrung (Fig. 2)
- 13: glatte Oberfläche des Lagerstützgehäuses 4 (Fig. 1)
- 14: Stellschraube (Fig. 1)
- 15: Greiferwelle / Falzmesserwelle (Fig. 1, Fig. 7)
- 16: Schmiermittelübertragungsbohrung im Kurvenwellen-Hebelarm 5 (Fig. 1)
- 16': Schmiermittelübertragungsbohrung im Exzenterbolzen 20 (Fig. 1)
- 16'': radiale Bohrungen (Fig. 1)
- 17: Pfropfen (Fig. 1)
- 17': Pfropfen (Fig. 1)
- 18: Teilausschnitt (Fig. 1)
- 19: Schlitz (Fig. 5)
- 20: Exzenterbolzen (Fig. 5)
- 21: Spannschraube (Fig. 5)
- 22: Zuführgehäuse (Fig. 1, Fig. 7)
- 30: axiale Bohrung (Fig. 2)
- 31: Querbohrung (Fig. 2)
- 100: Zylinder (Fig. 7)
- 101: Kunststoffrohr (Fig. 7)
- 102: Schmiermittelzuführleitungen (Fig. 7)

## Patentansprüche

1. Schmiermittelübertragungseinrichtung, welche die folgenden Merkmale umfaßt:
eine erste Komponente (4) mit einer Schmiermittelzuführbohrung (12);
eine Oberfläche (13);
eine zweite Komponente (5) mit einer Schmiermittelübertragungsbohrung (16), wobei die erste Komponente (4) und die zweite Komponente (5) in einem Bewegungsbereich (9, 10) relativ zueinander bewegbar sind; und
eine Schmiermittelübertragungsbuchse (8) mit einem Schmiermitteldurchlaß (30, 31), wobei die Schmiermittelübertragungsbuchse (8) gegen die Oberfläche (13) abgedichtet ist und der Schmiermitteldurchlaß (30, 31) in dem gesamten Bewegungsbereich (9, 10) mit der Schmiermittelzuführbohrung (12) und der Schmiermittelübertragungsbohrung (16) in Verbindung steht.

2. Schmiermittelübertragungseinrichtung nach Anspruch 1,
**dadurch gekennzeichnet,**
daß ferner eine Feder vorgesehen ist, die eine Vorspannung zwischen der Schmiermittelübertragungsbuchse (8) und der Oberfläche (13) herstellt.

3. Schmiermittelübertragungseinrichtung nach Anspruch 1,
**dadurch gekennzeichnet,**
daß ferner eine Stellschraube (14) zum Verstellen der Position der Schmiermittelübertragungsbuchse (8) relativ zur Oberfläche (13) vorgesehen ist.

4. Schmiermittelübertragungseinrichtung nach Anspruch 1,
**dadurch gekennzeichnet,**
daß die Schmiermittelübertragungsbuchse (8) aus einem Material besteht, das einen niedrigen Reibungsfaktor und einen hohen Verschleißwiderstand aufweist.

5. Schmiermittelübertragungseinrichtung nach Anspruch 1,
**dadurch gekennzeichnet,**
daß sich die Oberfläche (13) auf der ersten Komponente (4) befindet.

6. Schmiermittelübertragungseinrichtung nach Anspruch 5,
**dadurch gekennzeichnet,**
daß die Schmiermittelübertragungsbuchse (8) in der zweiten Komponente (5) angebracht ist.

7. Schmiermittelübertragungsvorrichtung, welche die folgenden Merkmale umfaßt:
eine Stützte(4) mit einer Schmiermittelzuführbohrung (12);
eine Oberfläche (13);
einen Arm (5) mit einer ersten Schmiermittelübertragungsbohrung (16), wobei der Arm (5) in einem Bewegungsbereich (9, 10) relativ zur Stützte(4) bewegbar ist;
und eine Schmiermittelübertragungsbuchse (8) mit einem Schmiermitteldurchlaß (30, 31), wobei die Schmiermittelübertragungsbuchse (8) gegen die Oberfläche (13) abgedichtet ist und der Schmiermitteldurchlaß (30, 31) in dem gesamten Bewegungsbereich mit der Schmiermittelzuführbohrung (12) und der Schmiermittelübertragungsbohrung (16) in Verbindung steht.

8. Schmiermittelübertragungsvorrichtung nach Anspruch 7,
**dadurch gekennzeichnet,**
daß ferner eine Feder vorgesehen ist, die eine Vorspannung zwischen der Schmiermittelübertragungsbuchse (8) und der Oberfläche (13) herstellt, um dem Verschleiß der Schmiermittelübertragungsbuchse (8) auf der Oberfläche (13) Rechnung zu tragen.

9. Schmiermittelübertragungsvorrichtung nach Anspruch 7,
**dadurch gekennzeichnet,**
daß ferner eine Stellschraube (14) zum Verstellen der Position der Schmiermittelübertragungsbuchse (8) relativ zur Oberfläche (13) vorgesehen ist.

10. Schmiermittelübertragungsvorrichtung nach Anspruch 7,
**dadurch gekennzeichnet,**
daß die Schmiermittelübertragungsbuchse (8) aus einem Material besteht, das einen niedrigen Reibungsfaktor und einen hohen Verschleißwiderstand aufweist.

11. Schmiermittelübertragungsvorrichtung nach Anspruch 7'
**dadurch gekennzeichnet,**
daß sich die Oberfläche (13) auf der Stütze (4) befindet.

12. Schmiermittelübertragungsvorrichtung nach Anspruch 11,
**dadurch gekennzeichnet,**
daß die Schmiermittelübertragungsbuchse (8) im Arm (5) angebracht ist.

13. Schmiermittelübertragungsvorrichtung nach Anspruch 7,
**dadurch gekennzeichnet,**
daß der Arm (5) ein Kurverrollen-Hebelarm mit mindestens einer Kurvenrolle (1) ist.

14. Schmiermittelübertragungsvorrichtung nach Anspruch 13,
**dadurch gekennzeichnet,**
daß die mindestens eine Kurvenrolle (1) auf einem Exzenterbolzen (20) drehbar gelagert ist und daß der Exzenterbolzen (20) auf dem Kurvenrollen-Hebelarm (5) angebracht ist.

15. Schmiermittelübertragungsvorrichtung nach Anspruch 14,
**dadurch gekennzeichnet,**
daß die mindestens eine Kurvenrolle (1) über ein Lager (7) auf dem Exzenterbolzen (20) gelagert ist.

16. Schmiermittelübertragungsvorrichtung nach Anspruch 14,
**dadurch gekennzeichnet,**
daß der Exzenterbolzen (20) mindestens eine zweite Schmiermittelübertragungsbohrung (16') aufweist, die mit der ersten Schmiermittelübertragungsbohrung (16) in Verbindung steht.

17. Schmiermittelübertragungsvorrichtung nach Anspruch 16,
**dadurch gekennzeichnet,**
daß ferner ein Ausschnitt (18) zwischen der mindestens einen zweiten Schmiermittelübertragungsbohrung (16') und der ersten Schmiermittelübertragungsbohrung (16) vorgesehen ist, der in den verschiedenen Winkelpositionen des Exzenterbolzens (20) die Verbindung zwischen der mindestens einen zweiten Schmiermittelübertragungsbohrung (16') und der ersten Schmiermittelübertragungsbohrung (16) herstellt.
